# EUROPEAN PATENT SPECIFICATION

(11) **EP 1 860 761 B1**
(45) Date of publication and mention of the grant of the patent: **05.01.2011**
(21) Application number: 06425361.0
(22) Date of filing: 26.05.2006
(51) Int. Cl.: H02M 7/48

(54) **Device and method for controlling inverters connected in series**
Vorrichtung und verfahren zur Steuerung in reihe Geschalteten Wechselrichter
Dispositif et méthode de contrôle d'onduleurs connectés en série

(43) Date of publication of application: 28.11.2007
(73) Proprietor: Ansaldo Sistemi Industriali S.p.A., 20126 Milano MI (IT)
(72) Inventor: Torri, Giordano Ansaldo Sistemi Industriali S.p.A., 20126 Milano (MI) (IT)
(74) Representative: Perani, Aurelio

(56) References cited:
- MCGRATH, B.P. , HOLMES, D.G.: "MULTICARRIER PWM STRATEGIES FOR MULTILEVEL INVERTERS" INDUSTRIAL ELECTRONICS, IEEE TRANSACTIONS ON, vol. 49, August 2002 (2002-08), pages 858-867, XP002415926
- LOH P C ET AL: "Reduced common mode carrier-based modulation strategies for cascaded multilevel inverters" CONFERENCE RECORD OF THE 2002 IEEE INDUSTRY APPLICATIONS CONFERENCE. 37TH IAS ANNUAL MEETING . PITTSBURGH, PA, OCT. 13 - 18, 2002, CONFERENCE RECORD OF THE IEEE INDUSTRY APPLICATIONS CONFERENCE. IAS ANNUAL MEETING, NEW YORK, NY : IEEE, US, vol. 1 OF 4. CONF. 37, 13 October 2002 (2002-10-13), pages 2002-2009, XP010610152 ISBN: 0-7803-7420-7
- RUFER A-C: "An aid in the teaching of multilevel inverters for high power applications" POWER ELECTRONICS SPECIALISTS CONFERENCE, 1995. PESC '95 RECORD., 26TH ANNUAL IEEE ATLANTA, GA, USA 18-22 JUNE 1995, NEW YORK, NY, USA,IEEE, US, vol. 1, 18 June 1995 (1995-06-18), pages 347-352, XP010150580 ISBN: 0-7803-2730-6
- DAE-WOOK KANG ET AL: "An improved carrierwave-based SVPWM method using phase voltage redundancies for generalized cascaded multilevel inverter topology" APPLIED POWER ELECTRONICS CONFERENCE AND EXPOSITION, 2000. APEC 2000. FIFTEENTH ANNUAL IEEE NEW ORLEANS, LA, USA 6-10 FEB. 2000, PISCATAWAY, NJ, USA,IEEE, US, vol. 1, 6 February 2000 (2000-02-06), pages 542-548, XP010371729 ISBN: 0-7803-5864-3

## Description

The present invention relates to a device for controlling inverters connected in series, according to the preamble of claim 1.

In particular, the application of the present invention is in power supply units for control of AC loads, such as, for example, three-phase motors.

Power supply units for AC loads are known in the state of the art, and comprise a transformer with primary and secondary windings which can be connected to a mains supply, a rectifier which converts the AC mains voltage into a DC voltage, and an inverter which converts the rectified DC voltage into an AC voltage at a predefined frequency determined by a pulse modulation width or PMW system, such as to supply this AC voltage to an AC motor, for example a three-phase induction motor.

An electrical supply unit to control medium voltage alternating current motors is described in patent US 5,625,545. In accordance with the above-described known art, the supply unit comprises a multiple-phase transformer with a plurality of secondary windings which supply power to a corresponding plurality of power cells connected in series for each phase of the motor. Each of the power cells has a single-phase output and can be controlled by a modulation controller device. Each cell has a rectifier which rectifies the AC voltage supplied by a secondary winding of the transformer, to supply a rectified DC voltage, a smoothing capacitor to eliminate the ripple present on the rectified DC voltage, and a PWM inverter which converts the DC voltage present at the ends of the capacitor into an AC voltage. The modulation controller device acts on each cell to control the output, such that the instant of switching of a cell to load phase line is separate in time from the instant of switching of the other cells in the same load phase line, such as to reduce the harmonic components in each load supply phase line. In particular, the modulation control is based on the sub-harmonic or sub-oscillation method, such that a single reference signal is compared with a plurality of carrier signals, one for each power signal, oscillating at the same frequency and suitably phase-shifted from one another according to the method defined as "inter-digitated". Typically, the phase-shift is equal to 360° divided by the number of cells in series on a load phase line. From the comparison between the reference signal and each carrier signal, there are generated control signals for the inverters of the cells, specifically for controlling switching on and off of the IGBT transistors which constitute each inverter.

An alternative method known for control of the modulation of inverters in series of an AC power supply unit involves use of a plurality of carrier signals oscillating at the same frequency, which are in phase with one another and being level shifted, i.e. having different levels of DC polarisation such as to occupy adjacent amplitude bands.

According to this alternative method, the positive carrier signals can be in phase opposition with the negative carrier signals, as well as the carrier signals can alternate as disposed in phase - in phase opposition (A new multilevel PWM method: a theoretical analysis. Carrara, Marchesoni et al. IEEE Transaction on Power Electronics, Vol. 7, n. 3 July 1992).

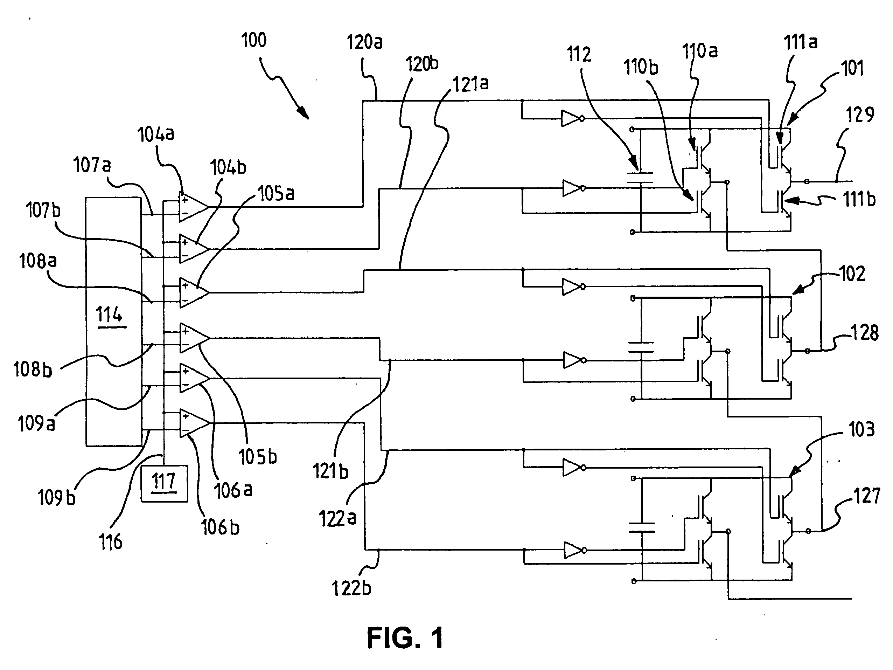

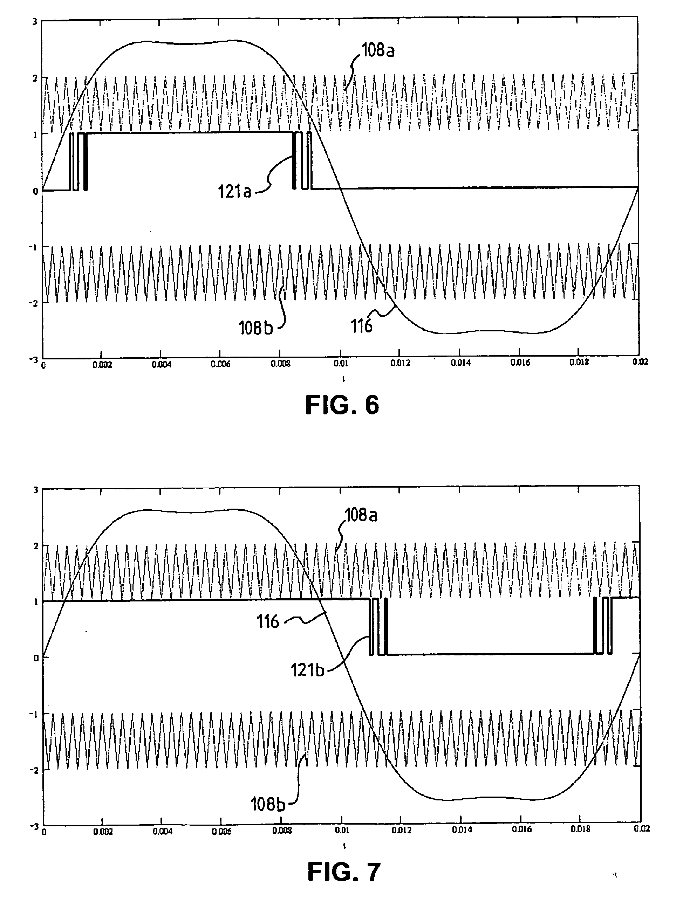

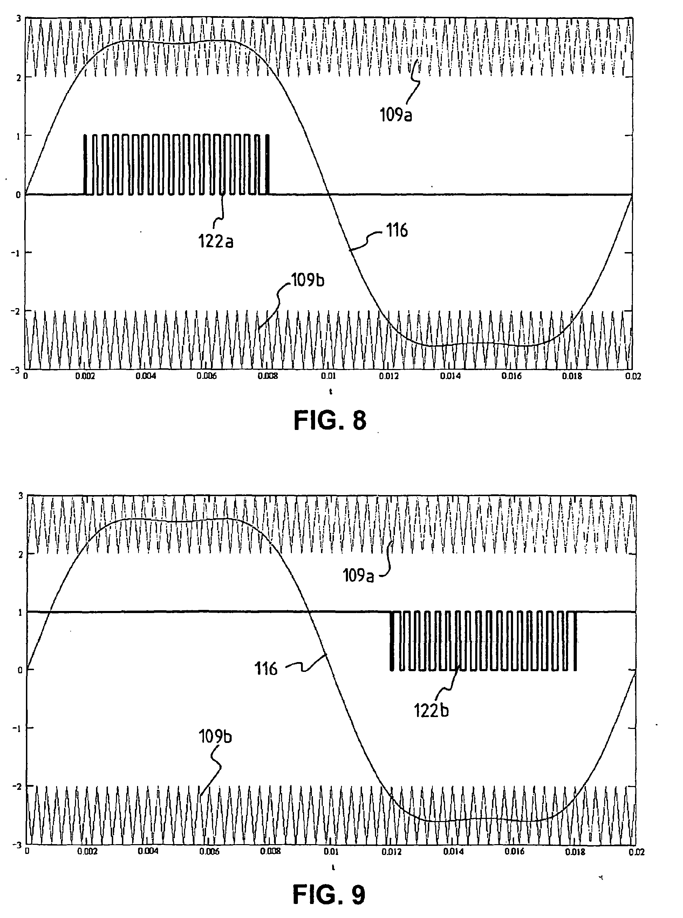

A device for control of inverters in series which uses the control method according to the above-described known art is illustrated with reference to figures 1 to 13 in the case of three power cells connected in series.

The control device 100 is designed to control three inverters 101, 102 and 103 connected in series to supply a three-phase motor. For simplicity of description, the inverters which are used to supply the other two phases of the three-phase motor have been omitted, as has the rectifying section of each cell.

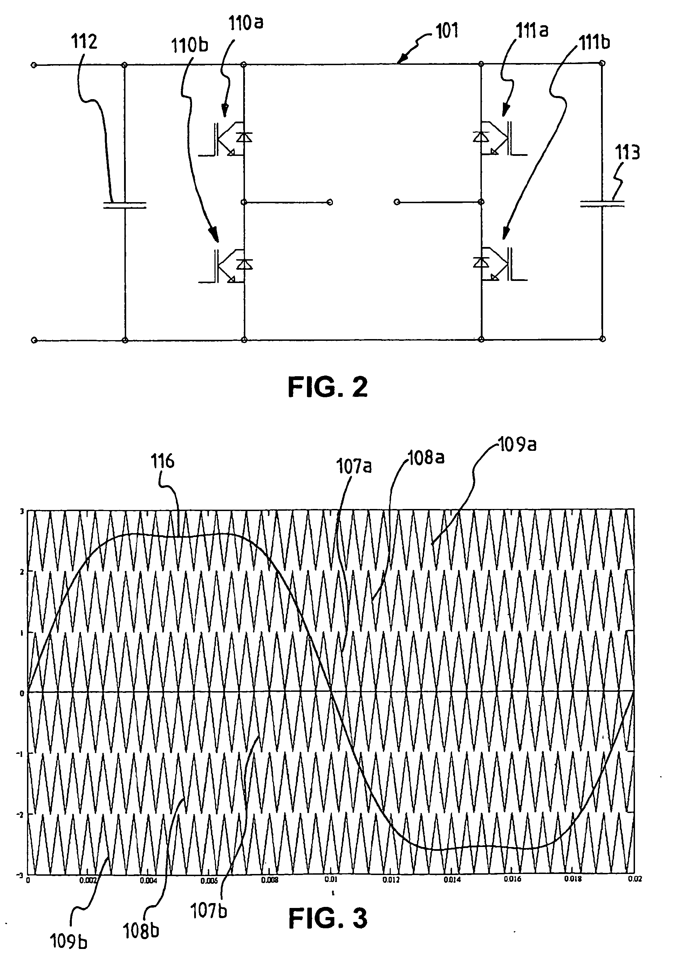

Each inverter, for example the inverter 101 shown in figure 2, consists of an H-bridge structure with two IGBT transistor branches, in particular a left-hand branch on which there are disposed two IGBT transistors 110a, 110b in series with one another, and a right-hand branch on which there are disposed two IGBT transistors 111a and 111b in series with one another. The inverter 101 additionally comprises two banks of smoothing capacitors 112 and 113 which are connected in parallel to the pairs of IGBT transistors 110a, 110b, 111a, 111b.

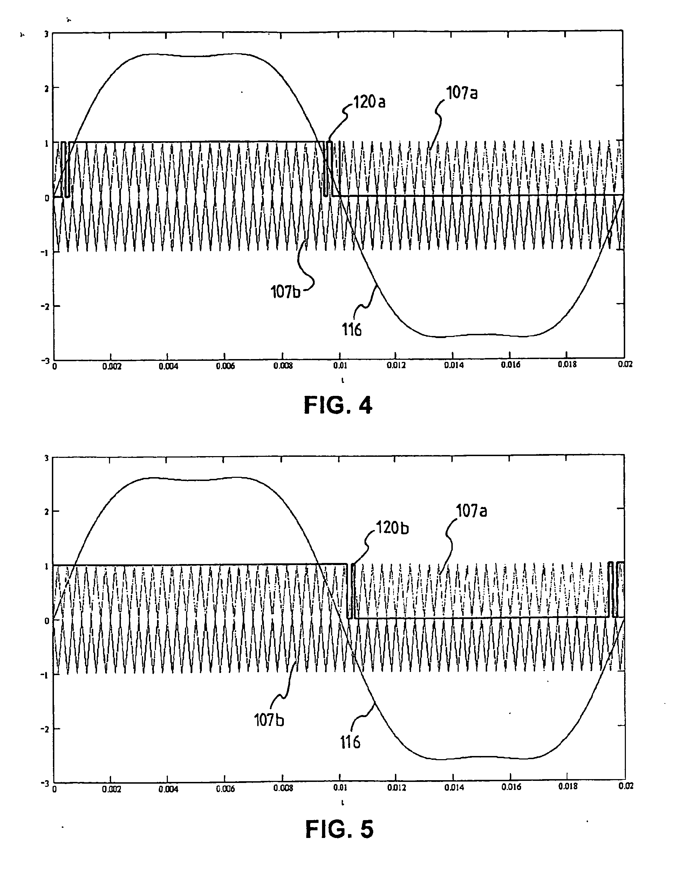

The control device 100 comprises six comparators 104a, 104b, 105a, 105b, 106a, 106b, each of which compares a reference signal or modulating signal 116 with a respective carrier signal 107a, 107b, 108a, 108b, 109a, 109b (figure 3) to generate six respective control signals 120a, 120b, 121a, 121b, 122a, 122b (figures 4 to 9) for the three inverters 101, 102, 103.

The carrier signals 107a, 107b, 108a, 108b, 109a, 109b are generated by a signal generator 114, whereas the reference signal 116 is generated by a signal generator 117.

In the attached figures, the signals are indicated with reference to the lines on which these signals are transmitted.

The carrier signals 107a, 107b, 108a, 108b, 109a, 109b oscillate at the same frequency, they are in phase with one another, and their DC levels are shifted. The carrier signals 107a, 107b, 108a, 108b, 109a, 109b shown in figure 3 are generated in pairs which are symmetrical relative to the zero voltage such that the pairs of symmetrical signals 107a and 107b, 108a and 108b, 109a and 109b are in phase opposition with one another. As an alternative, the pairs of signals 107a and 107b, 108a and 108b, 109a and 109b can be in phase with one another and DC level shifted.

The comparison of the pairs of carrier signals 107a and 107b, 108a and 108b, 109a and 109b with the reference signal 116 generates the pairs of control signals 120a and 120b, 121a and 121b, 122a and 122b, which are designed to control the respective right- and left-hand branches of each inverter (figures 4 to 9).

It should be pointed out that the control device 100 makes it possible to control the inverters 101, 102, 103 such that the instant of switching of an inverter on a phase line is separated in time from the instant of switching of the other inverters on the same phase line, such as to reduce the harmonic components on each load supply phase line, as is the case using the control device and the sub-harmonic method described in patent US 5,626,545.

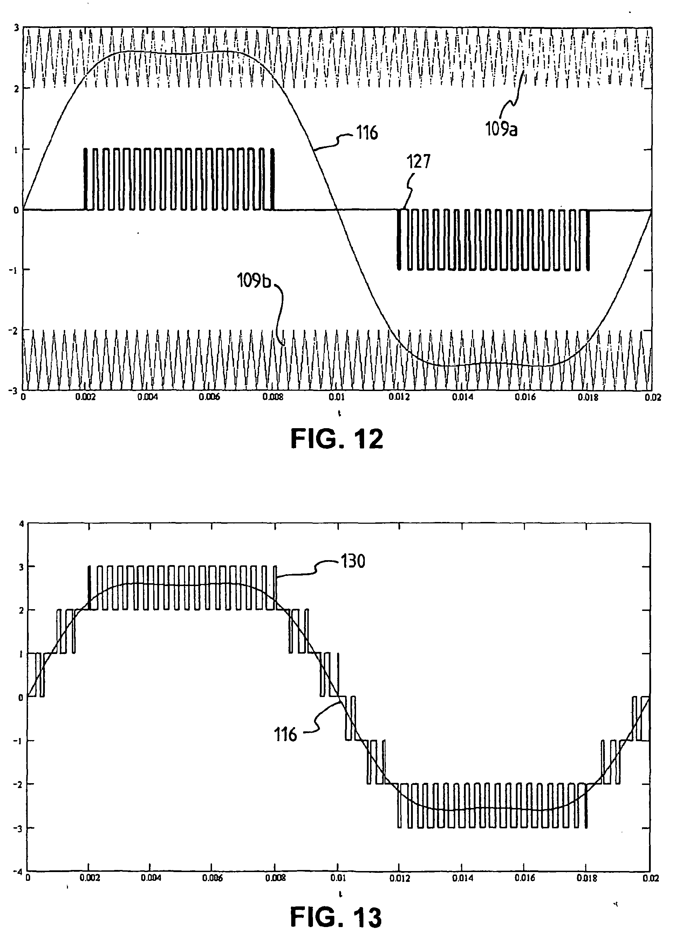

Figure 13 represents the waveform of the supply voltage 130 produced by the inverters 101, 102, 103 which are connected in series in the case of use of the control device 100, wherein the control signals 120a, 120b, 121a, 121b, 122a, 122b are generated by the comparison of the reference signal 116 with the carrier signals 107a, 107b, 108a, 108b, 109a, 109b.

It should be pointed out that the waveform of the voltage 130 produced by the inverters 101, 102, 103 in the case of use of the control device 100 corresponds substantially to that which would be produced by the inverters 101, 102, 103 in the case of use of the control device and the sub-harmonic modulation method described in patent US 5,625,545, in which carrier signals phase-shifted from one another are used. However, if account is taken of the voltages generated by the individual inverters 101, 102, 103, a substantial difference is noted.

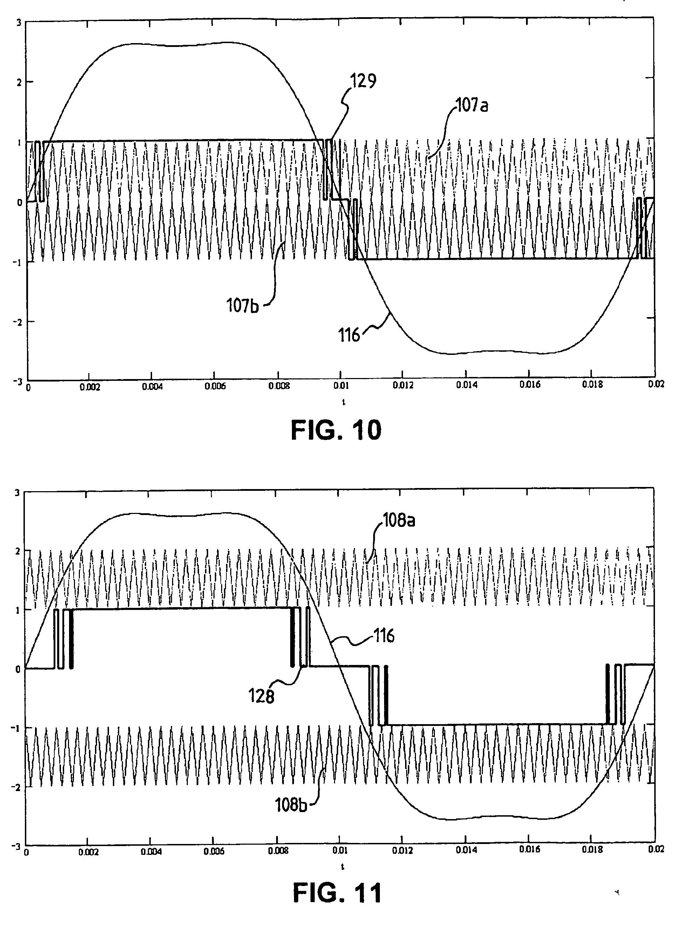

Figures 10, 11 and 12 represent the output voltages 127, 128, 129 which are generated respectively by the inverters 103, 102, 101 using the control device 100. The output voltages 127, 128, 129 relate to the real case in which the IGBT transistors have a square transfer function, without taking into consideration the delays of the transistors in switching.

Comparison of the waveforms of the output voltages 127, 128, 129 generated by the device 100 and those generated by the device described in patent US 5,625,545 shows that in the case of patent US 5,625,545 in which the carrier signals are phase-shifted from one another, the voltages generated by the individual inverters are uniform in relation to one another throughout the period of the reference signal, whereas in the case of the device 100 referred to in figures 1 to 13, in which the carrier signals are in phase and their DC level is shifted, the voltages 127, 128, 129 generated by the individual inverters 103, 102, 101 are not uniform in relation to one another throughout the period of the reference signal. In particular, if the load, in the example of an electric motor, has to be supplied with a sinusoidal voltage, each of the inverters 101, 102, 103 distributes on average a power which is different from that distributed by the other inverters in series. This means that each secondary winding of the transformer distributes a corresponding power which is different from that of the other secondary windings, such that the dimensions of the inverters cannot be designed for a same power. There is therefore lack of uniformity in the design of the inverters, which makes it necessary to use inverters with power levels which differ from one another.

This lack of uniformity is due to the fact that, as the period of the reference signal progresses, a single inverter at a time is modulated, whereas the other inverters which are connected in series on the same phase line are switched on in a fixed manner and provide a constant voltage equal to zero or equal to the maximum positive or negative value determined by the combination according to which the IGBT transistors of which the inverters consist are kept switched on. In particular, as can be seen from figures 4 to 9, the inverter 101 is loaded more than the inverters 102 and 103, with consequent lack of uniformity of the power distributed by each inverter.

McGarth B.P. and Holmes D.G. "Multicarrier Pwm Strategies For Multilevel Inverters" industrial electronics, IEEE transaction on, Vol. 49, No. 4 August 2002 (2002-08), pages 858-867, discloses a method for controlling series inverters where a plurality of reference waveform sections are compared with a plurality of carrier signals to generate a plurality of control signals and where the reference waveform sections are swapped between the cascaded inverters over two fundamental cycles.

Loh P.C. et al. "Reduced Common Mode Carrier-Based Modulation Strategies For Cascaded Multilevel Inverters", conference record of the 2002 IEEE industry application conference 37th IAS annual meeting, Pittsburgh, PA, Oct. 13 - 18, 2002, conference record of the IEEE industry applications conference, IAS annual meeting, New York, NY: IEEE, US, vol. 1 of 4, conf. 37, 13 October 2002 (2002-10-13), pages 2002-2009, discloses graphical technique for cascade inverters that eliminate common mode voltage on the output phases of inverters, where the control signals for the inverters are generated by comparing a plurality of reference signals with a plurality of carrier signals, where reference is in the middle of each band.

From the above, it comes out the need to have a device to control inverters which are connected in series and which, within the context of control signals which are generated by the comparison of a reference signal with carrier signals at the same frequency which are in phase with one another and DC level shifted, makes it possible to distribute the electrical power supplied to the load uniformly on the inverters which are connected in series.

The object of the present invention is thus to provide a device for controlling inverters in series which has structural and functional characteristics such as to meet the above-described requirements and simultaneously to eliminate the disadvantages encountered with reference to the known art.

This object is achieved by a device for controlling inverters according to claim 1.

According to a further aspect, this object is achieved by a method for controlling inverters in series according to claim 12.

Further characteristics and the advantages of the device and the method for controlling inverters in series according to the present invention will become apparent from the following description of a preferred embodiment, provided by way of indicative and non-limiting example, with reference to the attached figures, in which:
- figures 1 to 13 relate to a device for control of inverters in series according to the known art;
- figure 14 shows schematically a power supply unit for a three-phase motor, which has inverters in series which can be controlled by means of the device for control of inverters in series according to the present invention;
- figure 15 shows schematically a device for control of inverters in series according to the present invention;
- figure 16 shows schematically the structure of an inverter;
- figure 17 shows the waveforms of the reference signal and of the carrier signals used by the device in figure 15;
- figures 18 to 23 show the waveforms of the control signals generated by the control device in figure 15;
- figures 24 to 26 show the waveforms of the output signals of each inverter over several periods of the reference signal, according to a first embodiment of the device and the method according to the present invention;
- figure 27 shows the waveform of the supply signal generated by the inverters according to the first embodiment of the device and the method according to the present invention;
- figures 28 to 30 show the waveforms of the output signals of each inverter over a period of the reference signal, according to a second embodiment of the device and the method according to the present invention; and
- figure 31 shows the waveform of the supply signal generated by the inverters according to the second embodiment of the device and the method according to the present invention.

With reference to the attached figures, 1 indicates as a whole an AC power supply unit to control an AC load 2.

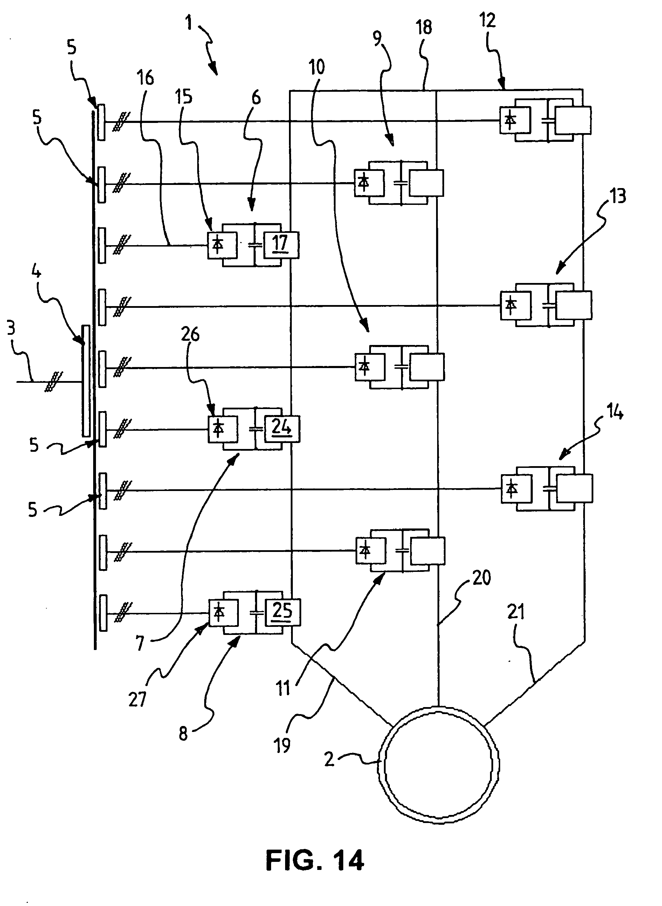

The AC load 2 can be a single-phase AC load or a multiple-phase AC load, and in the example in figure 14 it is represented by a three-phase induction motor.

The supply unit 1 comprises transformer means which can be connected to an AC power source (not shown in the figures), by means of a line 3, to receive an AC voltage or signal at a first frequency f₁. It should be pointed out that, hereinafter in the present description, the terms signal and voltage will be used in a manner which is entirely equivalent.

The transformer means comprise a primary winding circuit 4 and two or more secondary winding circuits 5. Typically, the primary winding circuit 4 is connected to the mains supply to receive a signal at the mains frequency f₁, for example of 50 Hz or 60 Hz.

For each of the three phase lines, the supply unit 1 comprises two or more power cells which are connected in series. In the example shown in figure 14, the supply unit 1 comprises three power cells 6, 7, 8 which are connected in series on the first phase line, three power cells 9, 10, 11 which are connected in series on the second phase line, and three power cells 12, 13, 14 which are connected in series on the third phase line.

In the example, the three groups of three cells in series are connected to one another at a single point identified as the common neutral point 18.

The three groups of cells in series are connected to the load 2 by means of respective phase lines 19, 20, 21.

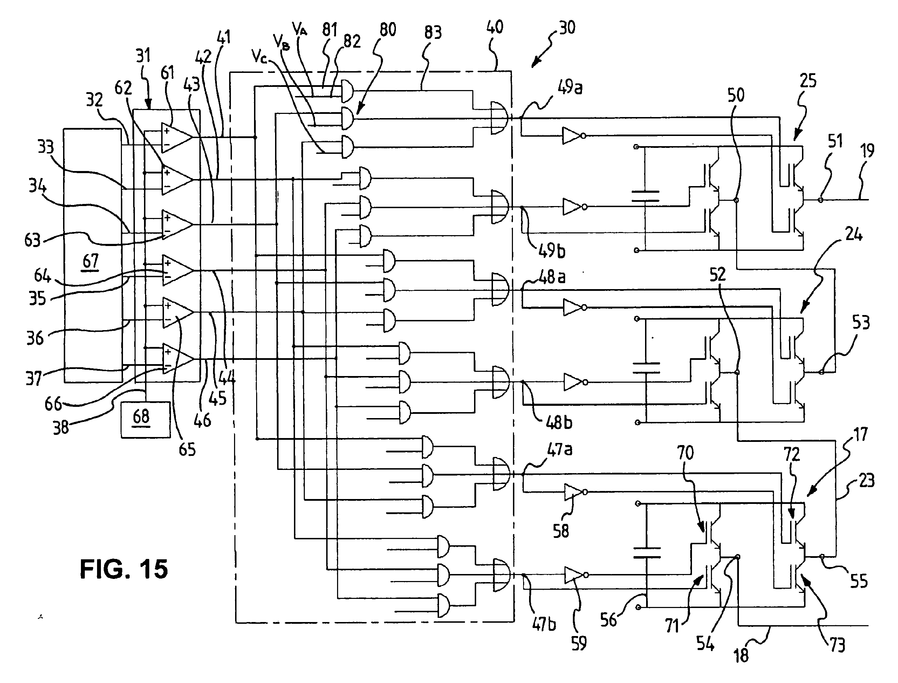

Each power cell, for example the cell 6 in figures 14 and 15, comprises a rectifier 15 which is connected electrically at its input via the line 16 to the output of a respective secondary winding circuit 5.

The cell 6 also comprises an inverter, indicated as 17 as a whole, which has an input connected to the output of the rectifier 15 to receive a DC signal, at least one input for a control signal, in the example two control inputs 47a and 47a, and an output 23 to generate an AC signal at a second frequency f₂. The inverter 17 additionally comprises two smoothing capacitors 56, 57; in figure 15 only the capacitor 56 is shown for the sake of simplicity.

The cells 7 and 8 comprise respective inverters 24 and 25 and respective rectifiers 26 and 27.

The inverters 17, 24, 25 are connected in series to supply the load 2 via the phase line 19.

In the same manner the cells 9, 10, 11 which are connected in series and the cells 12, 13, 14 which are connected in series, will have respective rectifiers and inverters which will be connected in series to supply the load 2 via the respective phase lines 20 and 21. For the sake of simplicity of description, hereinafter in the description, reference will be made only to the series of inverters 17, 24, 25.

In order to control the inverters 17, 24, 25 which are connected in series, the supply unit 1 comprises a control device 30 according to the present invention.

The control device 30 comprises a signal generator 67 to generate a plurality of carrier signals V_{c1}, V_{c1'}, V_{c2}, V_{c2'}, V_{c3}, V_{c3'} and a signal generator 68 to generate a reference signal V_{ref}.

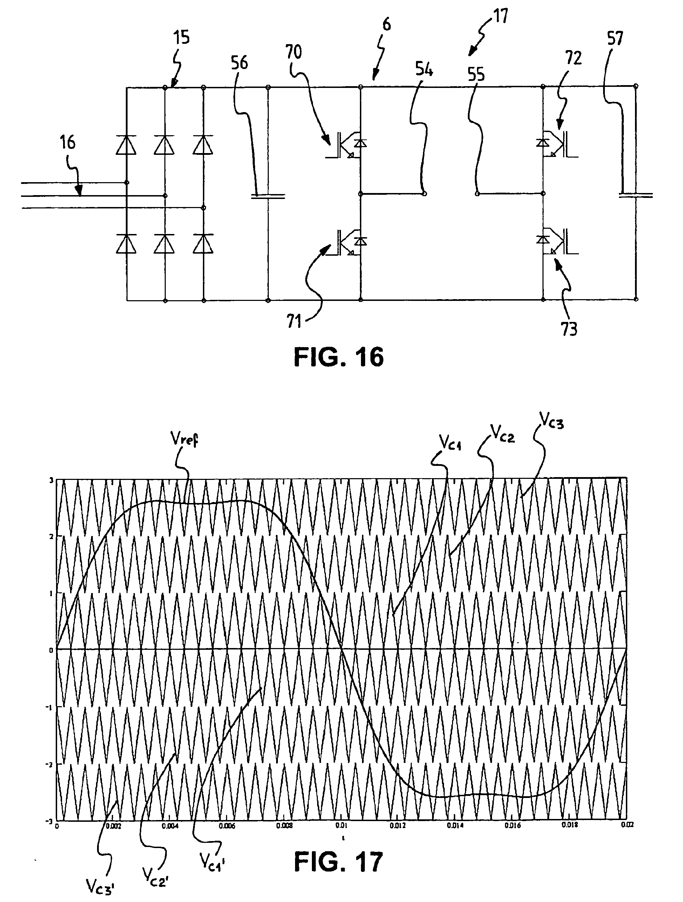

The carrier signals V_{c1}, V_{c1'}, V_{c2}, V_{c2'}, V_{c3}, V_{c3'} oscillate at a frequency f_{c}, they are in phase with one another, and have different DC levels. Alternatively, as shown in figure 17, the carrier signals v_{c1}, V_{e1'}, Vₑ₂, V_{c2'}, V_{c3}, V_{c3'} can be in phase opposition in pairs which are symmetrical relative to the zero level of the signal.

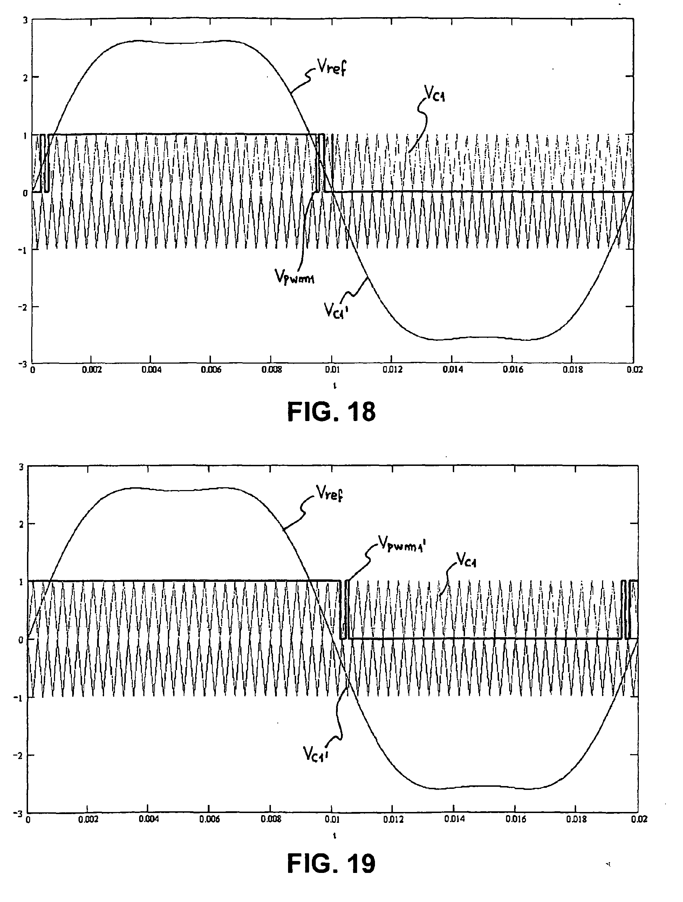

The control device 30 additionally comprises control means, indicated as 31 as a whole, able to compare the reference signal V_{ref} with each carrier signal of the plurality of carrier signals V_{c1}, V_{c1'}, V_{c2}, V_{c2'}, V_{c3}, V_{c3'} to generate as output a respective plurality of control signals V_{pwm1}, V_{pwm1'}, V_{pwm2}, V_{pwm2'}, V_{pwm3}, V_{pwm3'} (figures 18 to 23).

The control means 31 have an input line 32, 33, 34, 35, 36, 37 for each carrier signal v_{c1}, V_{c1'}, V_{c2}, V_{c2'}, V_{c3}, V_{c3'}, an input line 38 for the reference signal V_{ref} and an output line 41, 42, 43, 44, 45, 46 for each control signal V_{pwm1}, V_{pm1'}, V_{pwm2}, V_{pwm2'}, V_{pwm3}, V_{pwm3'}.

Advantageously, the control device 30 comprises switching means, indicated as 40 as a whole, able to direct each control signal V_{pwm1}, V_{pwm1'}, V_{pwm2}, V_{pwm2'}, V_{pwm3}, V_{pwm3'} as input in sequence to each of the inverters 17, 24, 25, in such a way that, at any temporal instant, the control input of each inverter is supplied by a single control signal of the plurality of control signals V_{pwm1}, V_{pwm1'}, V_{pwm2}, V_{pwm2'}, V_{pwm3}, V_{pwm3'}.

In other words, the switching means 40 are able to switch or direct each control signal V_{pwm1}, V_{pwm1'}, V_{pwm2}, V_{pwm2'}, V_{pwm3}, V_{pwm3'} in sequence alternately as input to the control input of each of the inverters 17, 24, 25 connected in series, in such a way that, at any temporal instant, the control input of each inverter is controlled by a single control signal V_{pwm1}, V_{pwm1'}, V_{pwm2}, V_{pwm2'}, V_{pwm3}, V_{pwm3'}.

In particular, the switching means 40 are able to direct, with a period Tₛ, the control signals V_{pwm1}, V_{pwm1'}, V_{pwm2}, V_{pwm2'}, V_{pwm3}, V_{pwm3'} to the input of the inverters 17, 24, 25. The period Tₛ consists of a number N of sub-periods t₁..t_{N} equal to the number of inverters connected in series. In the example shown in the attached figures, the period Tₛ consists of three sub-periods t₁, t₂, t₃ with the same duration equal to t, such that t₁+t₂+t₃=3t=Tₛ.

In each sub-period tᵢ, where i=1..N, each control input of the inverters is supplied by a single control signal, and each control signal supplies a single control input, and each control signal supplies an inverter which is different from the inverter supplied in the preceding sub-period.

In addition, in each period Tₛ, each control signal supplies each inverter during a single one of the sub-periods tᵢ.

As stated, the inverter 17 comprises two control inputs 47a, 47b. In the same manner, the inverter 24 comprises two control inputs 48a, 48b, and the inverter 25 comprises two control inputs 49a, 49b. It should be pointed out that in the most general case, it may be sufficient to have a single control input for each inverter, for example if the information to switch on the transistors is coded and transmitted serially.

According to a preferred embodiment, the control means 31 comprise a plurality of comparators 61, 62, 63, 64, 65, 66, wherein each comparator is able to compare the reference signal V_{ref} with a respective carrier signal V_{c1}, V_{c1'}, V_{c2}, V_{c2'}, V_{c3}, V_{c3'} to generate as output a respective control signal V_{pwm1}, V_{pwm1'}, V_{pwm2}, V_{pwm2'}, V_{pwm3}, V_{pwm3'}.

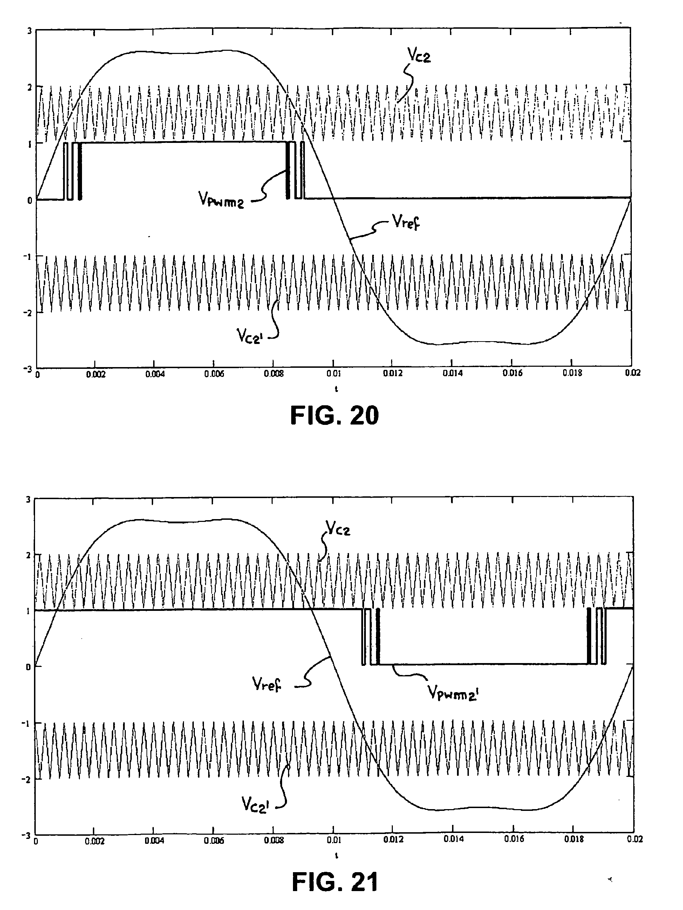

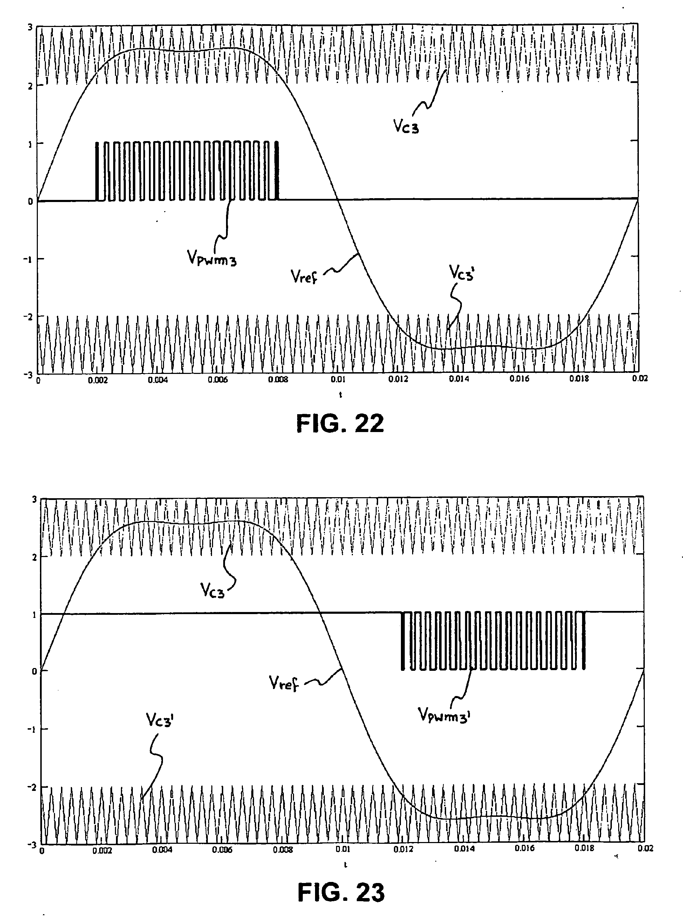

In the example shown in the attached figures:
- the comparator 61 compares the reference signal V_{ref} with the carrier signal V_{c1} generate as output the control signal V_{pwm1} (figure 18);
- the comparator 62 compares the reference signal V_{ref} with the carrier signal V_{c1'} to generate as output the control signal V_{pwm1'} (figure 19);
- the comparator 63 compares the reference signal V_{ref} with the carrier signal V_{c2} to generate as output the control signal V_{pwm2} (figure 20);
- the comparator 64 compares the reference signal V_{ref} with the carrier signal V_{c2'} to generate as output the control signal V_{pwm2'} (figure 21);
- the comparator 65 compares the reference signal V_{ref} with the carrier signal V_{c3} to generate as output the control signal V_{pwm3} (figure 22); and
- the comparator 66 compares the reference signal V_{ref} with the carrier signal V_{c3'} to generate as output the control signal V_{pwm3'} (figure 23).

In fact, figures 18 to 23 show the waveforms of the control signals generated by the control means 31.

Each inverter, for example the inverter 17 in figure 16, has a H-bridge structure with a left-hand branch on which there are disposed two IGBT transistors 70, 71 and a right-hand branch on which there are disposed two IGBT transistors 72, 73.

The transistors of the two left-hand and right-hand branches are designed to be controlled by two control signals. In a known manner, the control signals for the transistors 70, 71 of the left-hand branch and the transistors 72, 73 of the right-hand branch are obtained by the comparison of the reference signal V_{ref} respectively with a first carrier signal and with a second carrier signal.

In the example, the first and the second carrier signals are symmetrical relative to the signal level 0. Alternatively, the first and the second carrier signals can also not be symmetrical relative to the signal level 0.

In this case, the carrier signals V_{c1} and V_{c1'}, V_{c2} and V_{c2'} V_{c3} and V_{c3'} are carrier signals which are symmetrical relative to the voltage level 0. The corresponding control signals V_{pwm1} and V_{pwm1'}, V_{pwm2} and V_{pwm2'}, V_{pwm3} and V_{pwm3'} will be designed to control respectively the transistors of the right-hand branch and the transistors of the left-hand branch of each inverter directed to each inverter by the switching means 40.

In general, the control means 31 compare the reference signal V_{ref} with a first carrier signal, for example the signal V_{c1}, and with a second carrier signal which is symmetrical relative to the first carrier signal V_{c1}, i.e. the signal V_{c1}, relative to the zero level of the reference signal V_{ref}, to generate as output respectively a first control signal, in this example the control signal V_{pwm1}, and a second control signal, i.e. the control signal V_{pwm1'}.

In this case, the switching means 40 switch, that is direct the control signal V_{pwm1} in sequence to the first control input of each inverter, i.e. in sequence to the control inputs 47a, 48a, 49a of the inverters 17, 24, 25, and direct the second control signal V_{pwm1'} in sequence to the second control input of each inverter, i.e. in sequence to the control inputs 47b, 48b, 49b of the inverters 17, 24, 25, in such a way that, at any temporal instant, the first control input of each inverter is supplied by a single first control signal, and the second control input of each inverter is supplied by a single second control signal.

In a known manner, the control signal input at each control input of each inverter is separated into two control signals, one for each of the two IGBT transistors.

For example, the control signal input at the control input 47a of the inverter 17 is subdivided into two control signals, one to control the IGBT transistor 72 and the other, which is inverted by means of an inverting gate 58, to control the IGBT transistor 73 of the same right-hand branch of the inverter 17. In the same manner, the control signal input at the control input 47b of the inverter 17 is subdivided into two control signals, one to control the IGBT transistor 71 and the other, which is inverted by means of an inverting gate 59, to control the IGBT transistor 70 of the same left-hand branch of the inverter 17.

The duration of each sub-period tᵢ has to be greater than or equal to the period T_{c}=1/f_{c} of the carrier signals V_{c1}, V_{c1'}, V_{c2}, V_{c2'}, V_{c3}, V_{c3'}.

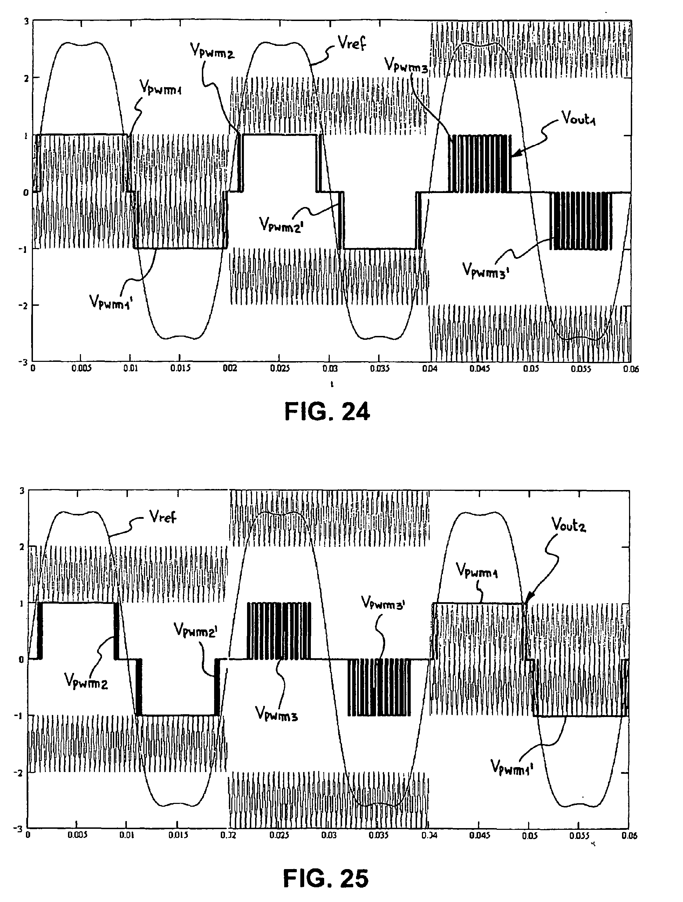

Figure 24 shows the development of the output voltage Vₒᵤₜ₁ generated by the inverter 25 of the cell 8 using the control device 30, in the hypothesis that each sub-period ti has a duration t which is equal to the period T_{ref} of the reference signal V_{ref}.

The output voltage vₒᵤₜ₁ represents the voltage between the terminals 51 and 50 of the inverter 25, in the hypothesis that the inverter 25 is not connected in series to the other inverters 17 and 24.

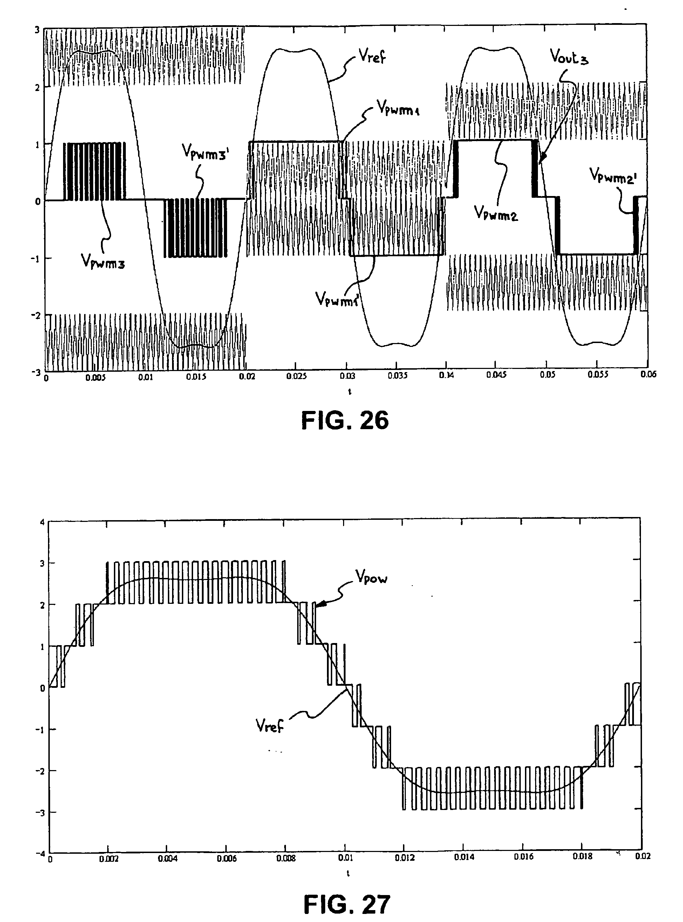

In the same manner, the output voltages Vₒᵤₜ₂ (figure 25) and Vₒᵤₜ₃ (figure 26) are represented respectively between the terminals 53 and 52 of the inverter 24, and between the terminals 55 and 54 of the inverter 17, in the hypothesis that the inverters are not connected in series to one another.

As can be noted, the output voltages Vₒᵤₜ₂ and Vₒᵤₜ₃, which are generated by the two inverters 24 and 17 and are shown in figures 25 and 26, are identical to the output voltage Vₒᵤₜ₁ of the inverter 25 shown in figure 24, but are displaced by a time interval equal to a sub-period t for the inverter 24 and by a time interval equal to 2t for the inverter 17.

This is caused by the fact that each inverter is controlled by a different control signal at each sub-period t of the switching means 40, as previously described.

For example, with reference to figure 15, the control input 49a of the inverter 25 receives the control signal V_{pwm1} in the first sub-period from 0 to t, the control signal V_{pwm2} in the second sub-period from t to 2t, and the control signal V_{pwm3} in the third sub-period from 2t to 3t. The above mentioned directing step is then repeated with the period Tₛ.

In the hypothesis that the transistors of the inverters are considered ideal, the output signal at the terminal 51 corresponds to the control signal V_{pwm1} in the first sub-period from 0 to T, to the control signal V_{pwm2} in the second sub-period from t to 2t, and to the control signal V_{pwm3} in the third sub-period from 2t to 3t.

In the same manner, the control input 49b of the inverter 25 receives the control signal V_{pwm1'} in the first sub-period from 0 to t, the control signal V_{pwm2'} in the second sub-period from t to 2t, and the control signal V_{pwm3'} in the third sub-period from 2t to 3t.

In the hypothesis that the transistors of the inverters are considered ideal, and maintaining the same convention of sign used for the signal of the terminal 51, the output signal at the terminal 50 corresponds to the complement of the control signal V_{pwm1'} in the first sub-period from 0 to t, to the complement of the control signal V_{pwm2'} in the second sub-period from t to 2t, and to the complement of, the control signal V_{pwm3'} in the third sub-period from 2t to 3t.

This therefore provides between the terminals 51 and 50 the output signal Vₒᵤₜ₁ as the difference between the aforementioned signals of the terminals 51 and 50, and as shown in figure 24 which, it should be noted, also indicates the signals V_{pwm1}, V_{pwm1'}, V_{pwm2}, V_{pwm2'}, V_{pwm3}, V_{pwm3'} with reference to the sub-periods 0-t, t-2t and 2t-3t.

The same reasoning can be applied to figures 25 and 26, with reference to the inverters 24 and 17 respectively.

Table 1 below summarises what has been previously described with reference to figures 24 to 26, in relation to a practical example of use of the device 30 according to the present invention.

**Table 1**

| | Control input | t₁ | t₂ | t₃ |
|---|---|---|---|---|
| Inverter 25 | 49a | V_{pwm1} | V_{pwm2} | V_{pwm3} |
| | 49b | V_{pwm1'} | V_{pwm2'} | V_{pwm3'} |
| Inverter 24 | 48a | V_{pwm2} | V_{pwm3} | V_{pwm1} |
| | 48b | V_{pwm2'} | V_{pwm3'} | V_{pwm1'} |
| Inverter 17 | 47a | V_{pwm3} | V_{pwm1} | V_{pwm2} |
| | 47b | V_{pwm3'} | V_{pwm1'} | V_{pwm2'} |

As can be seen from table 1, in each sub-period tᵢ, each control input of the inverters is supplied by a single control signal, and each control signal supplies a single control input, and each control signal supplies an inverter which is different from the inverter supplied in the preceding sub-period.

In addition, in each period Tₛ, each control signal supplies each inverter during a single one of the sub-periods tᵢ.

Since the inverters 17, 24, 25 are connected in series, the final voltage V_{pow} on the phase line 19 applied to the load 2 is the sum of the signals Vₒᵤₜ₁, Vₒᵤₜ₂ and Vₒᵤₜ₃, and assumes the form shown in figure 27, which, as required, reproduces the waveform of the reference signal V_{ref}.

As can be seen by examining the waveforms represented in figures 24-26, the average output powers generated by each inverter and evaluated for a period equal to 3Tₛ=3T_{ref} are identical to one another, such that the electric power supplied to the load 2 is, as required, distributed uniformly on the inverters 17, 24, 25 connected in series.

It should be pointed out that the sub-period tᵢ of the switching means 40 can be different from the period T_{ref} of the reference voltage V_{ref}, provided that the lower limit is equal to the period T_{c} of the carrier signals V_{c1}, V_{c1'}, V_{c2}, V_{c2'}, V_{c3}, V_{c3'}.

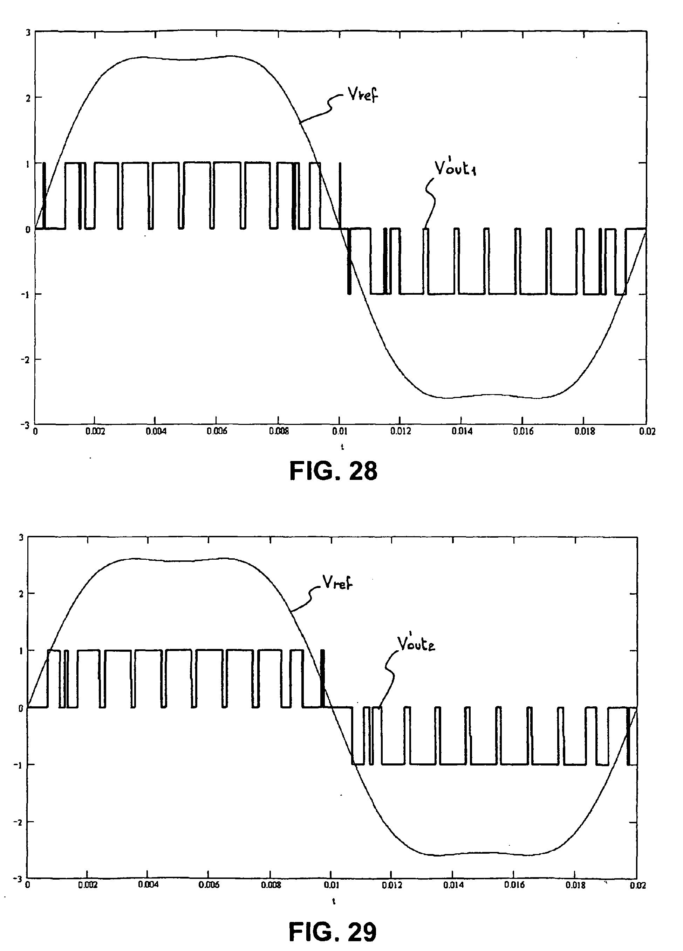

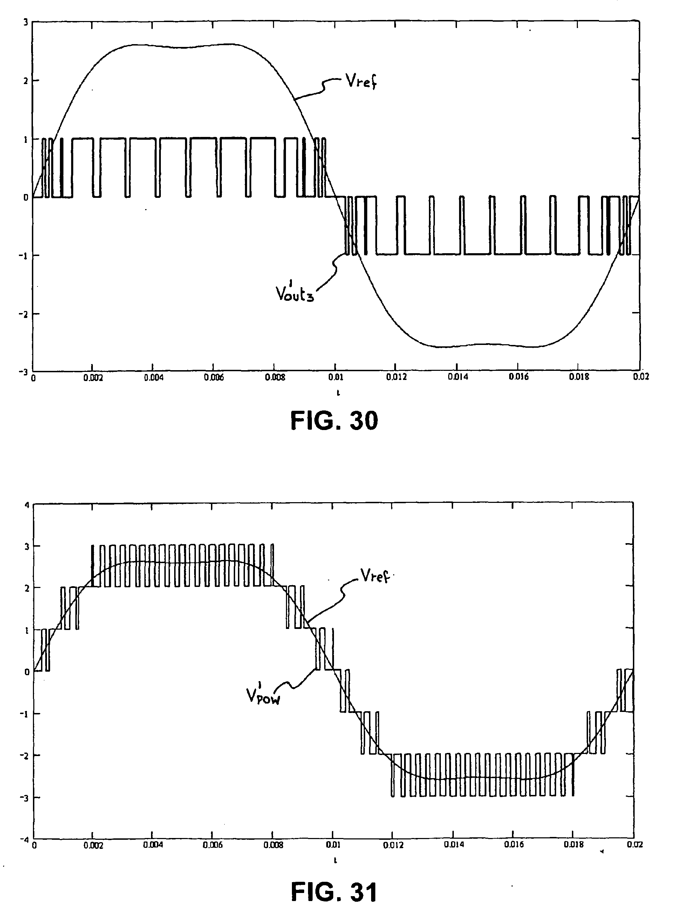

If the control signals generated by the control means 31 are switched, i.e. directed, by the switching means 40 to the inverters in series 17, 24, 25 with a sub-period with a duration t equal to the period T_{c} of the carrier signals V_{c1}, V_{c1'}, V_{c2}, V_{c2'}, V_{c3}, V_{c3'}, the inverters 17, 24, 25 produce as output the voltages V'ₒᵤₜ₁, V'ₒᵤₜ₂, V'ₒᵤₜ₃ represented in figures 28 to 30, whereas the final voltage V'_{pow} for supply of the load 2 is represented in figure 31.

As can be seen, the final voltage V'_{pow} applied to the load 2 in the hypothesis in which the duration t of the sub-period is equal to the period T_{c} of the carrier signals (figures 28 to 30), corresponds to the final voltage V_{pow} applied to the load 2 in the hypothesis in which the duration t of the sub-period is longer than the period T_{c} of the carrier signals, in the example in figures 24 to 26, and specifically is equal to the period T_{ref} of the reference signal V_{ref}.

Analysis of the output voltages V'ₒᵤₜ₁, V'ₒᵤₜ₂, V'ₒᵤₜ₃ represented in figures 28 to 30 also shows that these output voltages from each inverter are substantially uniform in relation to one another in the period T_{ref} of the reference signal V_{ref}, since they are obtained by directing the control signals input in sequence to each of the inverters with a sub-period t which is shorter than the period T_{ref} of the reference signal V_{ref}. In this case therefore, the average output powers generated by each inverter are substantially identical to one another, even when evaluated over a period which is equal to the period T_{ref} of the reference voltage V_{ref}, such that the electric power supplied to the load 2 is distributed in a manner which is virtually uniform on the inverters 17, 24, 25 which are connected in series.

According to a preferred embodiment, the switching means 40 comprise a plurality of AND logic gates and a generator of switching signals (not shown in the figures) which can generate switching signals V_{A}, V_{B}, V_{C} to control the directing of the control signals V_{pwm1}, V_{pwm1'}, V_{pwm2}, V_{pwm2'}, V_{pwm3}, V_{pwm3'} input at each of the inverters 14, 24, 25. In particular, the switching signals V_{A}, V_{B}, V_{C} make it possible to establish the order of the inverters to which there must be directed each control signal V_{pwm1}, V_{pwm1'}, V_{pwm2}, V_{pwm2'}, V_{pwm3}, V_{pwm3'}, generated by the control means 31.

Each AND logic gate, for example the logic gate 80, has a first input 81 which is connected to the control means 31 to receive a control signal, in the example the control signal V_{pwm1}, and a second input 82 which is connected to the switching signal generator to receive a switching signal, in the example the switching signal V_{A}, and an output 83 which can be connected to an inverter.

The switching signals V_{A}, V_{B}, V_{C} have the same frequency f_{sw}=1/T_{sw} which is equal to, or smaller than, the frequency f_{c}=1/Tc of the carrier signals V_{c1}, V_{c1}, V_{c2}, V_{c2'}, V_{c3}, V_{c3'}.

The outputs of the AND logic gates are connected to one another in groups at the input of an OR logic gate, such that each control signal V_{pwm1}, V_{pwm1}, V_{pwm2}, V_{pwm2'} V_{pwm3}, V_{pwm3'} is directed to each of the inverters as previously described, according to the switching signal logic value V_{A}, V_{B}, V_{C}

For example, the switching signal V_{A} can be represented by the sequence 1, 0, 0, the signal V_{B} by the sequence 0, 1, 0 and the signal V_{C} by the sequence 0, 0, 1. The other AND logic gates will be connected in a manner such as to carry out the logic function required.

As can be appreciated from the foregoing description, the device for controlling inverters in series according to the invention makes it possible to satisfy the requirements specified in the introductory part of the present description and to eliminate the disadvantages of the control devices according to the known art.

In particular, by means of use of the device according to the present invention, the average output power levels generated by each inverter and evaluated over a predefined period are substantially identical to one another, apart from insignificant losses, such that the electric power supplied to the load is distributed in a uniform manner on the inverters which are connected in series.

It will be appreciated that, to meet contingent and specific requirements, a person skilled in the art will be able to make many modifications and variations to the above-described device according to the invention, all of which are nevertheless included in the scope of protection of the invention as defined by the following claims.

## Claims

1. Device (30) for controlling two or more inverters (17,24,25) connected in series, each inverter being able to receive as input a DC signal and at least one control signal for generating an AC signal as output, said device (30) comprising:
- a first signal generator (67) able to generate a plurality of carrier signals (V_{c1}, V_{c1'}, V_{c2}, V_{c2'}, V_{c3}, V_{c3'}), the carrier signals of said plurality of carrier signals (V_{c1}, V_{c1'}, V_{c2}, V_{c2'}, V_{c3}, V_{c3'}) being at a single frequency (f_{c}), in phase with one another, or, in pairs, in phase opposition with one another, and having different DC levels;
- a second signal generator (68) able to generate a reference signal (V_{ref});
- control means (31) able to compare said reference signal (V_{ref}) with each carrier signal of said plurality of carrier signals (V_{c1}, V_{c1'}, V_{c2}, V_{c2'}, V_{c3}, V_{c3'}) for generating as output a respective plurality of control signals (V_{pwm1}, V_{pwm1'}, V_{pwm2}, V_{pwm2'}, V_{pwm3}, V_{pwm3'}), **characterised in that** it comprises
- switching means (40) able to direct each control signal of said plurality of control signals (V_{pwm1}, V_{pwm1'} V_{pwm2}, V_{pwm2'}, V_{pwm3}, V_{pwm3'}) in sequence as input to each of said two or more inverters (17,24,25) in such a way that, at any temporal instant, the at least one control input of each inverter is supplied by a single control signal of said plurality of control signals (V_{pwm1}, V_{pwm1'}, V_{pwm2}, V_{pwm2'}, V_{pwm3}, V_{pwm3'}).

2. Device (30) according to claim 1, wherein said switching means (40) are able to direct, with a period Tₛ, said control signals (V_{pwm1}, V_{pwm1'}, V_{pwm2}, V_{pwm2'}, V_{pwm3}, V_{pwm3'}) as input in said two or more inverters (17, 24, 25), said period Tₛ consisting of a number of sub-periods tᵢ equal to the number of inverters connected in series, wherein:
- in each sub-period tᵢ:
- each control input is supplied by a single control signal and each control signal supplies a single control input; and
- each control signal supplies an inverter which is different from the inverter supplied in the preceding sub-period;
- in each period Tₛ :
- each control signal supplies each inverter during a single one of said sub-periods tᵢ.

3. Device (30) according to claim 2, wherein said sub-periods tᵢ have the same duration t.

4. Device (30) according to claim 2 or claim 3, wherein said sub-periods tᵢ have a duration t which is greater than, or equal to the period T_{c} of said carrier signals (V_{c1}, V_{c1'}, V_{c2}, V_{c2'}, V_{c3}, V_{c3'}).

5. Device (30) according to any one of claims 1 to 4, wherein said control means (31) comprise a plurality of comparators (61, 62, 63, 64, 65, 66), each comparator of said plurality of comparators (61, 62, 63, 64, 65, 66) being able to compare said reference signal (V_{ref}) with a respective carrier signal of said plurality of carrier signals (V_{c1}, V_{c1'}, V_{c2}, V_{c2'}, V_{c3}, V_{c3'}) to generate as output a respective control signal, said switching means (31) being able to direct the control signal generated by each comparator in sequence as input to each of the inverters (17, 24, 25) in such a way that, at any temporal instant, the at least one control input of each inverter is supplied by a single control signal of said plurality of control signals (V_{pwm1}, V_{pwm1'}, V_{pwm2}, V_{pwm2'}, V_{pwm3}, V_{pwm3'}).

6. Device (30) according to any one of claims 1 to 5, wherein each inverter comprises a first control input (47a) to receive a first control signal, a second control input (47b) to receive a second control signal, first (72, 73) and second (70, 71) switching means able to be controlled respectively by said first and second control signals, said control means (31) being able to compare said reference signal (V_{ref}) with a first carrier signal (V_{c1}, V_{c2}, V_{c3}) and with a second carrier signal (V_{c1'}, V_{c2'}, V_{c3'}) of said plurality of carrier signals (V_{c1}, V_{c1'}, V_{c2}, V_{c2'}, V_{c3}, V_{c3'}) to generate respectively said first and second control signals, said switching means (40) being able to direct said first control signal in sequence to the first control input (47a, 48a, 49a) of each inverter, and said second control signal in sequence to the second control input (47b, 48b, 49b) of each inverter in such a way that, at any temporal instant, the first control input of each inverter is supplied by a single first control signal of said plurality of control signals (V_{pwm1}, V_{pwm1'}, V_{pwm2}, V_{pwm2'}, V_{pwm3}, V_{pwm3'}) and the second control input of each inverter is supplied by a single second control signal of said plurality of control signals (V_{pwm1}, V_{pwm1'}, V_{pwm2}, V_{pwm2'}, V_{pwm3}, V_{pwm3'}).

7. Device (30) according to claim 6, wherein each inverter comprises an H-bridge structure with a first and a second branch, said first (72, 73) and second (70, 71) switching means being disposed respectively on said first and second branch, said first (V_{c1}, V_{c2}, V_{c3}) and second (V_{c1'}, V_{c2'}, V_{c3'}) carrier signals being symmetrical relative to the zero level of the reference signal (V_{ref}).

8. Device (30) according to any one of claims 1 to 7, wherein said switching means (40) comprise a plurality of AND logic gates and a switching signals generator, each logic gate (80) of said plurality of logic gates having a first input (81) which is connected to said control means (31) to receive a control signal (V_{pmw1}), a second input (82) which is connected to said switching signals generator to receive a switching signal (V_{A}) and an output (83) which can be connected to an inverter, the outputs of said logic gates (80) being connected to one another in groups as input in an OR logic gate in such a way that each control signal (V_{pwm1}, V_{pwm1'}, V_{pwm2'}, V_{pwm2'}, V_{pwm3}, V_{pwm3'}) is directed as input in sequence to each of the inverters depending on the logic value of the switching signals (V_{A}, V_{B}, V_{C}).

9. Device (30) according to any one of claims 1 to 8, wherein each control signal (V_{pwm1}, V_{pwm1'}, V_{pwm2}, V_{pwm2'}, V_{pwm3}, V_{pwm3'}) is directed as input in sequence to each of the inverters in such a way that the average power levels of the AC output signal generated by each inverter, when evaluated over a predefined time interval, correspond substantially to one another, so that the power supplied by the inverters is distributed uniformly on the inverters.

10. AC power supply unit (1) to drive an AC load (2), comprising:
- transformer means able to receive an AC signal at a first frequency (f₁) and comprise a primary winding circuit (4) and two or more secondary winding circuits (5);
- two or more power cells which are connected in series (6,7,8), each power cell (6) comprising:
- a rectifier (15) having an AC input connected to a respective secondary winding circuit (5) and a DC output;
- an inverter (17) having a DC input connected to the DC output of the rectifier to receive a DC signal, at least one control input to receive a control signal and an AC output to generate an AC signal at a second frequency (f₂);
the inverters (17, 24, 25) of said power cells (6,7,8) being connected in series to supply said AC load (2); and
- a device (30) for controlling said inverters (17, 24, 25) connected in series, according to any one of claims 1 to 9.

11. AC power supply unit (1) according to claim 10, wherein said AC load (2) is a load having a number N of phases, said supply unit (1) comprising N inverters for each phase of said AC load.

12. Method for controlling two or more inverters (17,24,25) connected in series, each inverter being able to receive as input a DC signal and at least one control signal to generate as output an AC signal, said method comprising the steps of:
- comparing a reference signal (V_{ref}) with each carrier signal of a plurality of carrier signals (V_{c1}, V_{c1'}, V_{c2}, V_{c2'} V_{c3}, V_{c3'}) to generate as output a respective plurality of control signals (V_{pwm1}, V_{pwm1'}, V_{pwm2}, V_{pwm2'}, V_{pwm3}, V_{pwm3'}), the carrier signals of the plurality of carrier signals (V_{c1}, V_{c1'}, V_{c2}, V_{c2'}, V_{c3}, V_{c3'}) being at the same frequency (f_{c}) and in phase with one another, and having different DC levels;
- directing each control signal of said plurality of control signals (V_{pwm1}, V_{pwm1'}, V_{pwm2}, V_{pwm2'}, V_{pwm3}, V_{pwm3'}) in sequence as input to each of said two or more inverters (14, 24, 25) in such a way that, at any temporal instant, the at least one control input of each inverter is supplied by a single control signal of said plurality of control signals (V_{pwm1}, V_{pwm1'}, V_{pwm2}, V_{pwm2'}, V_{pwm3}, V_{pwm3'}).

13. Method according to claim 12, wherein said directing step comprising directing, with a period Tₛ, said control signals (V_{pwm1}, V_{pwm1'}, V_{pwm2}, V_{pwm2'}, V_{pwm3},V_{pwm3'}) as input to said two or more inverters (17, 24, 25), said period Tₛ consisting of a number of sub-periods t₁ which is equal to the number of inverters connected in series, wherein:
- in each sub-period tᵢ:
- each control input is supplied by a single control signal, and each control signal supplies a single control input; and
- each control signal supplies an inverter which is different from the inverter supplied in the preceding sub-period;
- in each period Tₛ:
- each control signal supplies each inverter during a single one of said sub-periods tᵢ.

## Patentansprüche

1. Vorrichtung (30) zum Steuern von zwei oder mehr in Reihe geschalteten Wechselrichtern (17, 24, 25), wobei jeder Wechselrichter in der Lage ist, als Eingang ein DC-Signal und mindestens ein Steuersignal zum Erzeugen eines AC-Signals als Ausgang zu empfangen, wobei die Vorrichtung (30) umfaßt:
- einen ersten Signalgenerator (67), der in der Lage ist, eine Vielzahl von Trägersignalen (V_{c1}, V_{c1'}, V_{c2}, Vc_{2',} V_{c3}, Vc_{3'}) zu erzeugen, wobei die Trägersignale aus der Vielzahl von Trägersignalen (V_{c1}, V_{c1'}, V_{c2}, Vc_{2',} V_{c3}, Vc_{3')} dieselbe Frequenz (f_{c}) aufweisen, miteinander in Phase sind oder paarweise gegenphasig zueinander sind und unterschiedliche Gleichstrompegel aufweisen,
- einen zweiten Signalgenerator (68), der in der Lage ist, ein Referenzsignal (V_{ref}) zu erzeugen,
- Steuerungsmittel (31), die in der Lage sind, das Referenzsignal (V_{ref}) mit jedem Trägersignal aus der Vielzahl von Trägersignalen (V_{c1}, V_{c1'}, V_{c2}, V_{c2',} V_{c3}, V_{c3'}) zu vergleichen, um als Ausgang eine entsprechende Vielzahl von Steuersignalen (V_{pwm1}, V_{pwm1'}, V_{pwm2}, V_{pwm2'}, V_{pwm3}, V_{pwm3'}) zu erzeugen,
**dadurch gekennzeichnet, daß** sie umfaßt
- Schaltmittel (40), die in der Lage sind, jedes Steuersignal aus der Vielzahl von Steuersignalen (V_{pwm1}, V_{pwm1'}, V_{pwm2}, V_{pwm2'}, V_{pwm3}, V_{pwm3'}) nacheinander jedem der zwei oder mehr Wechselrichter (17, 24, 25) als Eingang zuzuführen, derart, daß zu einem beliebigen Zeitpunkt der mindestens eine Steuereingang jedes Wechselrichters von einem einzigen Steuersignal aus der Vielzahl von Steuersignalen (V_{pwm1}, V_{pwm1'}, V_{pwm2}, V_{pwm2'}, V_{pwm3}, V_{pwm3'}) versorgt wird.

2. Vorrichtung (30) nach Anspruch 1, wobei die Schaltmittel (40) in der Lage sind, die Steuersignale (V_{pwm1}, V_{pwm1'}, V_{pwm2}, V_{pwm2'}, V_{pwm3}, V_{pwm3'}) mit einer Periode Tₛ den zwei oder mehr Wechselrichtern (17, 24, 25) als Eingang zuzuführen, wobei die Periode Tₛ aus einer Anzahl von Teilperioden tᵢ besteht, die gleich der Anzahl der in Reihe geschalteten Wechselrichter ist, wobei:
- in jeder Teilperiode tᵢ:
- jeder Steuereingang von einem einzigen Steuersignal versorgt wird und jedes Steuersignal einen einzigen Steuereingang versorgt, und
- jedes Steuersignal einen Wechselrichter versorgt, welcher von dem Wechselrichter verschieden ist, der in der vorhergehenden Teilperiode versorgt wird,
- in jeder Periode Tₛ:
- jedes Steuersignal jeden Wechselrichter während einer einzigen der Teilperioden tᵢ versorgt.

3. Vorrichtung (30) nach Anspruch 2, wobei die Teilperioden tᵢ dieselbe Dauer t haben.

4. Vorrichtung (30) nach Anspruch 2 oder Anspruch 3, wobei die Teilperioden tᵢ eine Dauer t haben, welche größer als die oder gleich der Periode T_{c} der Trägersignale (v_{c1}, V_{c1'}, V_{c2}, V_{c2',} V_{c3}, V_{c3'}) ist.

5. Vorrichtung (30) nach einem der Ansprüche 1 bis 4, wobei die Steuerungsmittel (31) eine Vielzahl von Komparatoren (61, 62, 63, 64, 65, 66) umfassen, wobei jeder Komparator aus der Vielzahl von Komparatoren (61, 62, 63, 64, 65, 66) in der Lage ist, das Referenzsignal (V_{ref}) mit einem jeweiligen Trägersignal aus der Vielzahl von Trägersignalen (V_{c1}, V_{c1'}, V_{c2}, V_{c2'}, V_{c3}, V_{c3'}) zu vergleichen, um als Ausgang ein jeweiliges Steuersignal zu erzeugen, wobei die Schaltmittel (40) in der Lage sind, die von den einzelnen Komparatoren erzeugten Steuersignale nacheinander jedem der Wechselrichter (17, 24, 25) als Eingang zuzuführen, derart, daß zu einem beliebigen Zeitpunkt der mindestens eine Steuereingang jedes Wechselrichters von einem einzigen Steuersignal aus der Vielzahl von Steuersignalen (V_{pwm1}, V_{pwm1'}, V_{pwm2}, V_{pwm2'}, V_{pwm3}, V_{pwm3'}) versorgt wird.

6. Vorrichtung (30) nach einem der Ansprüche 1 bis 5, wobei jeder Wechselrichter einen ersten Steuereingang (47a), um ein erstes Steuersignal zu empfangen, einen zweiten Steuereingang (47b), um ein zweites Steuersignal zu empfangen, und erste (72, 73) und zweite (70, 71) Schaltmittel, die in der Lage sind, von dem ersten bzw. zweiten Steuersignal gesteuert zu werden, umfaßt, wobei die Steuerungsmittel (31) in der Lage sind, das Referenzsignal (V_{ref}) mit einem ersten Trägersignal (V_{c1}, V_{c2}, V_{c3}) und mit einem zweiten Trägersignal (V_{c1'}, V_{c2'}, V_{c3'}) aus der Vielzahl von Trägersignalen (V_{c1}, V_{c1'}, V_{c2}, V_{c2'}, V_{c3}, V_{c3'}) zu vergleichen, um das erste bzw. zweite Steuersignal zu erzeugen, wobei die Schaltmittel (40) in der Lage sind, das erste Steuersignal nacheinander dem ersten Steuereingang (47a, 48a, 49a) jedes Wechselrichters und das zweite Steuersignal nacheinander dem zweiten Steuereingang (47b, 48b, 49b) jedes Wechselrichters zuzuführen, derart, daß zu einem beliebigen Zeitpunkt der erste Steuereingang jedes Wechselrichters von einem einzigen ersten Steuersignal aus der Vielzahl von Steuersignalen (V_{pwm3}, V_{pwm1'}, V_{pwm2}, V_{pwm2'}, V_{pwm3}, V_{pwm3'}) versorgt wird und der zweite Steuereingang jedes Wechselrichters von einem einzigen zweiten Steuersignal aus der Vielzahl von Steuersignalen (V_{pwm1}, V_{pwm1'}, V_{pwm2}, V_{pwm2'}, V_{pwm3}, V_{pwm3'}) versorgt wird.

7. Vorrichtung (30) nach Anspruch 6, wobei jeder Wechselrichter eine H-Brücken-Struktur mit einem ersten und einem zweiten Zweig umfaßt, wobei die ersten (72, 73) und zweiten (70, 71) Schaltmittel an dem ersten bzw. zweiten Zweig angeordnet sind, wobei das erste (V_{c1}, V_{c2}, V_{c3}) und zweite Trägersignal (V_{c1'}, V_{c2'}, V_{c3'}) symmetrisch bezüglich des Nullpegels des Referenzsignals (V_{ref}) sind.

8. Vorrichtung (30) nach einem der Ansprüche 1 bis 7, wobei die Schaltmittel (40) eine Vielzahl von logischen UND-Gattern und einen Schaltsignalgenerator umfassen, wobei jedes logische Gatter (80) aus der Vielzahl von logischen Gattern einen ersten Eingang (81), welcher mit den Steuerungsmitteln (31) verbunden ist, um ein Steuersignal (V_{pmw1}) zu empfangen, einen zweiten Eingang (82), welcher mit dem Schaltsignalgenerator verbunden ist, um ein Schaltsignal (V_{A}) zu empfangen, und einen Ausgang (83), welcher mit einem Wechselrichter verbunden werden kann, aufweist, wobei die Ausgänge der logischen Gatter (80) miteinander in Gruppen als Eingang in einem logischen ODER-Gatter verbunden sind, derart, daß jedes Steuersignal (V_{pwm1}, V_{pwm1'}, V_{pwm2}, V_{pwm2'}, V_{pwm3}, V_{pwm3'}) nacheinander jedem der Wechselrichter in Abhängigkeit vom logischen Wert der Schaltsignale (V_{A}, V_{B}, V_{C}) als Eingang zugeführt wird.

9. Vorrichtung (30) nach einem der Ansprüche 1 bis 8, wobei jedes Steuersignal (V_{pwm1}, V_{pwm1'}, V_{pwm2}, V_{pwm2'}, V_{pwm3}, V_{pwm3'}) nacheinander jedem der Wechselrichter als Eingang zugeführt wird, derart, daß die mittleren Leistungspegel der von den einzelnen Wechselrichtern erzeugten AC-Ausgangssignale, über ein vordefiniertes Zeitintervall berechnet, im Wesentlichen einander entsprechen, so daß die von den Wechselrichtern gelieferte Leistung gleichmäßig auf die Wechselrichter verteilt ist.

10. AC-Stromversorgungseinheit (1) zum Antreiben einer AC-Last (2), umfassend:
- Transformatormittel, die in der Lage sind, ein AC-Signal mit einer ersten Frequenz (f₁) zu empfangen, und einen Primärwicklungskreis (4) und zwei oder mehr Sekundärwicklungskreise (5) umfassen,
- zwei oder mehr Energiezellen, welche in Reihe geschaltet sind (6, 7, 8), wobei jede Energiezelle (6) umfaßt:
- einen Gleichrichter (15), der einen mit einem jeweiligen Sekundärwicklungskreis (5) verbundenen AC-Eingang und einen DC-Ausgang aufweist,
- einen Wechselrichter (17), der einen mit dem DC-Ausgang des Gleichrichters verbundenen DC-Eingang zum Empfangen eines DC-Signals, mindestens einen Steuereingang zum Empfangen eines Steuersignals und einen AC-Ausgang zum Erzeugen eines AC-Signals mit einer zweiten Frequenz (f₂) aufweist,
wobei die Wechselrichter (17, 24, 25) der Energiezellen (6, 7, 8) in Reihe geschaltet sind, um die AC-Last (2) zu versorgen, und
- eine Vorrichtung (30) zum Steuern der in Reihe geschalteten Wechselrichter (17, 24, 25) nach einem der Ansprüche 1 bis 9.

11. AC-Stromversorgungseinheit (1) nach Anspruch 10, wobei die AC-Last (2) eine Last mit einer Anzahl N von Phasen ist, wobei die Stromversorgungseinheit (1) N Wechselrichter für jede Phase der AC-Last umfaßt.

12. Verfahren zum Steuern von zwei oder mehr in Reihe geschalteten Wechselrichtern (17, 24, 25), wobei jeder Wechselrichter in der Lage ist, als Eingang ein DC-Signal und mindestens ein Steuersignal zum Erzeugen eines AC-Signals als Ausgang zu empfangen, wobei das Verfahren die folgenden Schritte umfaßt:
- Vergleichen eines Referenzsignals (V_{ref}) mit jedem Trägersignal aus einer Vielzahl von Trägersignalen (V_{c1}, V_{c1'}, V_{c2}, Vc_{2',} V_{c3}, V_{c3'}), um als Ausgang eine entsprechende Vielzahl von Steuersignalen (V_{pwm1}, V_{pwm1'}, V_{pwm2}, V_{pwm2',} V_{pwm3}, V_{pwm3'}) zu erzeugen, wobei die Trägersignale aus der Vielzahl von Trägersignalen (V_{c1}, V_{c1'}, V_{c2}, V_{c2'}, V_{c3}, V_{c3'}) dieselbe Frequenz (f_{c}) aufweisen, miteinander in Phase sind und unterschiedliche Gleichstrompegel aufweisen,
- Zuführen jedes Steuersignal aus der Vielzahl von Steuersignalen (V_{pwm1}, V_{pwm1'}, V_{pwm2}, V_{pwm2'}, V_{pwm3}, V_{pwm3'}) nacheinander zu jedem der zwei oder mehr Wechselrichter (17, 24, 25) als Eingang, derart, daß zu einem beliebigen Zeitpunkt der mindestens eine Steuereingang jedes Wechselrichters von einem einzigen Steuersignal aus der Vielzahl von Steuersignalen (V_{pwm1}, V_{pwm1'}, V_{pwm2}, V_{pwm2'}, V_{pwm3}, V_{pwm3'}) versorgt wird.

13. Verfahren nach Anspruch 12, wobei der Schritt des Zuführens das Zuführen der Steuersignale (V_{pwm1}, V_{pwm1'}, V_{pwm2}, V_{pwm2'}, V_{pwm3}, V_{pwm3'}) mit einer Periode Tₛ als Eingang zu den zwei oder mehr Wechselrichtern (17, 24, 25) umfaßt, wobei die Periode Tₛ aus einer Anzahl von Teilperioden tᵢ besteht, welche gleich der Anzahl der in Reihe geschalteten Wechselrichter ist, wobei:
- in jeder Teilperiode tᵢ:
- jeder Steuereingang von einem einzigen Steuersignal versorgt wird und jedes Steuersignal einen einzigen Steuereingang versorgt, und
- jedes Steuersignal einen Wechselrichter versorgt, welcher von dem Wechselrichter verschieden ist, der in der vorhergehenden Teilperiode versorgt wird,
- in jeder Periode Tₛ:
- jedes Steuersignal jeden Wechselrichter während einer einzigen der Teilperioden tᵢ versorgt.

## Revendications

1. Dispositif (30) de commande de deux ou plusieurs convertisseurs (17, 24, 25) montés en série, chacun des convertisseurs étant apte à recevoir comme entrée un signal CC et au moins un signal de commande pour générer un signal CA comme sortie, le dispositif (30) comprenant:
- un premier générateur de signaux (67) apte à générer une pluralité de signaux porteurs (V_{c1}, V_{c1'}, V_{c2}, V_{c2',} V_{c3}, V_{c3'}), les signaux porteurs de la pluralité de signaux porteurs (V_{c1}, V_{c1'}, V_{c2}, V_{c2'}, V_{c3}, V_{c3'}) présentant la même fréquence (f_{c}), étant en phase les uns avec les autres ou, par paires, en opposition de phase et présentant des niveaux différents de courant continu,
- un deuxième générateur de signaux (68) apte à générer un signal de référence (V_{ref}),
- des moyens de commande (31) aptes à comparer le signal de référence (V_{ref}) à chaque signal porteur de la pluralité de signaux porteurs (V_{c1}, V_{c1'}, V_{c2,} V_{c2',} V_{c3}, V_{c3'}) afin de générer comme sortie une pluralité respective de signaux de commande (V_{pwm1}, V_{pwm1'}, V_{pwm2}, V_{pwm2'}, V_{pwm3}, V_{pwm3'}),
**caractérisé par le fait qu'**il comprend
- des moyens de commutation (40) aptes à amener chacun des signaux de commande de la pluralité de signaux de commande (V_{pwm1}, V_{pwm1'}, V_{pwm2}, V_{pwm2'}, V_{pwm3}, V_{pwm3'}) successivement, comme entrée, à chacun desdits deux ou plusieurs convertisseurs (17, 24, 25), de telle sorte que, à un instant quelconque, ladite au moins une entrée de commande de chaque convertisseur est alimentée par un seul signal de commande de la pluralité de signaux de commande (V_{pwm1}, V_{pwm1'}, V_{pwm2}, V_{pwm2'}, V_{pwm3}, V_{pwm3'}).

2. Dispositif (30) selon la revendication 1, dans lequel les moyens de commutation (40) sont aptes à amener, avec une période Tₛ, lesdits signaux de commande (V_{pwm1}, V_{pwm1'}, V_{pwm2}, V_{pwm2'}, V_{pwm3}, V_{pwm3'}) comme entrée aux deux ou plusieurs convertisseurs (17, 24, 25), la période Tₛ étant constituée par un nombre de sous-périodes tᵢ égal au nombre des convertisseurs montés en série, dans lequel:
- dans chaque sous-période tᵢ:
- chaque entrée de commande est alimentée par un seul signal de commande et chaque signal de commande alimente une seule entrée de commande, et
- chaque signal de commande alimente un convertisseur qui est différent du convertisseur alimenté durant la sous-période précédente,
- dans chaque période Tₛ:
- chaque signal de commande alimente chaque convertisseur durant une seule des sous-périodes tᵢ.

3. Dispositif (30) selon la revendication 2, dans lequel les sous-périodes tᵢ ont la même durée t.

4. Dispositif (30) selon la revendication 2 ou la revendication 3, dans lequel les sous-périodes tᵢ présentent une durée t qui est supérieure ou égale à la période T_{c} des signaux porteurs (V_{c1}, V_{c1'}, V_{c2}, V_{c2'}, V_{c3}, V_{c3'}).

5. Dispositif (30) selon l'une quelconque des revendications 1 à 4, dans lequel les moyens de commande (31) comprennent une pluralité de comparateurs (61, 62, 63, 64, 65, 66), chacun des comparateurs de ladite pluralité de comparateurs (61, 62, 63, 64, 65, 66) étant apte à comparer le signal de référence (V_{ref}) à un signal porteur respectif de la pluralité de signaux porteurs (V_{c1}, V_{c1'}, V_{c2}, V_{c2'}, V_{c3}, V_{c3'}) afin de générer comme sortie un signal de commande respectif, les moyens de commutation (40) étant aptes à amener successivement, comme entrée, les signaux de commande générés par les comparateurs individuels à chacun des convertisseurs (17, 24, 25), de telle sorte que, à un instant quelconque, ladite au moins une entrée de commande de chaque convertisseur est alimentée par un seul signal de commande de la pluralité de signaux de commande (V_{pwm1}, V_{pwm1'}, V_{pwm2}, V_{pwm2'}, V_{pwm3}, V_{pwm3'}).

6. Dispositif (30) selon l'une quelconque des revendications 1 à 5, dans lequel chacun des convertisseurs comprend une première entrée de commande (47a) afin de recevoir un premier signal de commande, une deuxième entrée de commande (47b) pour recevoir un deuxième signal de commande, et des premiers (72, 73) et deuxièmes (70, 71) moyens de commutation aptes à être commandés par le premier signal de commande et le deuxième signal de commande respectivement, les moyens de commande (31) étant aptes à comparer le signal de référence (V_{ref}) à un premier signal porteur (V_{c1}, V_{c2}, V_{c3}) et à un deuxième signal porteur (V_{c1'}, V_{c2'}, V_{c3'}) de la pluralité de signaux porteurs (V_{c1}, V_{c1'}, V_{c2}, V_{c2'}, V_{c3}, V_{c3'}) afin de générer le premier et le deuxième signal de commande respectivement, les moyes de commutation (40) étant aptes à amener le premier signal de commande successivement à la première entrée de commande (47a, 48a, 49a) de chaque convertisseur et le deuxième signal de commande successivement à la deuxième entrée de commande (47b, 48b, 49b) de chaque convertisseur, de telle sorte que, à un instant quelconque, ladite première entrée de commande de chaque convertisseur est alimentée par un seul premier signal de commande de la pluralité de signaux de commande (V_{pwm1}, V_{pwm1'}, V_{pwm2}, V_{pwm2'}, V_{pwm3}, V_{pwm3'}) et que ladite deuxième entrée de commande de chaque convertisseur est alimentée par un seul deuxième signal de commande de la pluralité de signaux de commande (V_{pwm1}, V_{pwm1'}, V_{pwm2}, V_{pwm2'}, V_{pwm3}, V_{pwm3'}).

7. Dispositif (30) selon la revendication 6, dans lequel chacun des convertisseurs comprend une structure de pont en H ayant des première et deuxième branches, les premiers (72, 73) et les deuxièmes (70, 71) moyens de commutation étant disposés sur ladite première branche et sur ladite deuxième branche respectivement, les premier (V_{c1}, V_{c2}, V_{c3}) et deuxième (V_{c1'}, V_{c2'}, V_{c3'}) signaux porteurs étant symétriques par rapport au niveau zéro du signal de référence (V_{ref}).

8. Dispositif (30) selon l'une quelconque des revendications 1 à 7, dans lequel les moyens de commutation (40) comprennent une pluralité de portes logiques ET et un générateur de signaux de commutation, chacune des portes logiques (80) de la pluralité de portes logiques comprenant une première entrée (81) qui est reliée aux moyens de commande (31) afin de recevoir un signal de commande (V_{pmw1}), une deuxième entrée (82) qui est reliée au générateur de signaux de commutation afin de recevoir un signal de commutation (VA) ainsi qu'une sortie (83) qui peut être reliée à un convertisseur, les sorties des portes logiques (80) étant connectées les unes aux autres par groupes comme entrée dans une porte logique OU de telle sorte que chaque signal de commande (V_{pwm1}, V_{pwm1'}, V_{pwm2}, V_{pwm2'}, V_{pwm3}, V_{pwm3'}) est amené comme entrée successivement à chacun des convertisseurs en fonction de la valeur logique des signaux de commutation (V_{A}, V_{B}, V_{C}).

9. Dispositif (30) selon l'une quelconque des revendications 1 à 8, dans lequel chaque signal de commande (V_{pwm1}, V_{pwm1'}, V_{pwm2}, V_{pwm2'}, V_{pwm3}, V_{pwm3'}) est amené comme entrée successivement à chacun des convertisseurs de telle façon que les niveaux moyens de puissance des signaux de sortie CA générés par les convertisseurs individuels, évalués sur un intervalle de temps prédéterminé, correspondent pour l'essentiel les uns aux autres, de sorte que la puissance fournie par les convertisseurs est répartie uniformément sur les convertisseurs.

10. Unité d'alimentation en courant alternatif (1) pour entraîner une charge CA (2), comprenant:
- des moyens transformateurs aptes à recevoir un signal CA à une première fréquence (f₁) et comprenant un circuit d'enroulement primaire (4) et deux ou plusieurs circuits d'enroulement secondaire (5),
- deux ou plusieurs cellules d'énergie montées en série (6, 7, 8), chacune des cellules d'énergie (6) comprenant :
- un redresseur (15) qui présente une entrée CA reliée à un circuit respectif d'enroulement secondaire (5) ainsi qu'une sortie CC,
- un convertisseur (17) qui présente une entrée CC connectée à la sortie CC du redresseur pour recevoir un signal CC, au moins une entrée de commande pour recevoir un signal de commande ainsi qu'une sortie CA pour générer un signal CA à une deuxième fréquence (f₂),
les convertisseurs (17, 24, 25) des cellules d'énergie (6, 7, 8) étant montés en série afin d'alimenter la charge CA (2), et
- un dispositif (30) pour commander les convertisseurs (17, 24, 25) montés en série, selon l'une des revendications 1 à 9.

11. Unité d'alimentation en courant alternatif (1) selon la revendication 10, dans laquelle ladite charge CA (2) est une charge ayant un nombre N de phases, ladite unité d'alimentation (1) comprenant N convertisseurs pour chaque phase de la charge CA.

12. Procédé de commande de deux ou plusieurs convertisseurs (17, 24, 25) montés en série, chacun des convertisseurs étant apte à recevoir comme entrée un signal CC et au moins un signal de commande pour générer un signal CA comme sortie, le procédé comprenant les étapes suivantes consistant à:
- comparer un signale de référence (V_{ref}) à chaque signal porteur d'une pluralité de signaux porteurs (V_{c1}, V_{c1'}, V_{c2}, V_{c2'}, V_{c3}, V_{c3'}) afin de générer comme sortie une pluralité respective de signaux de commande (V_{pwm1}, V_{pwm1'}, V_{pwm2}, V_{pwm2'}, V_{pwm3}, V_{pwm3'}), les signaux porteurs de la pluralité de signaux porteurs (V_{c1}, V_{c1'}, V_{c2}, V_{c2'}, V_{c3}, V_{c3'}) ayant la même fréquence (f_{c}), étant en phase les uns avec les autres et présentant des niveaux différents de courant continu,
- à amener chacun des signaux de commande de la pluralité de signaux de commande (V_{pwm1}, V_{pwm1'}, V_{pwm2}, V_{pwm2'}, V_{pwm3}, V_{pwm3'}) successivement, comme entrée, à chacun desdits deux ou plusieurs convertisseurs (17, 24, 25), de telle sorte que, à un instant quelconque, ladite au moins une entrée de commande de chaque convertisseur est alimentée par un seul signal de commande de la pluralité de signaux de commande (V_{pwm1}, V_{pwm1'}, V_{pwm2}, V_{pwm2'}, V_{pwm3}, V_{pwm3'}).

13. Procédé selon la revendication 12, dans lequel l'étape d'amenée comprend l'amenée des signaux de commande (V_{pwm1}, V_{pwm1'}, V_{pwm2}, V_{pwm2'}, V_{pwm3}, V_{pwm3'}), avec une période Tₛ, comme entrée aux deux ou plusieurs convertisseurs (17, 24, 25), ladite période Tₛ étant constituée par un nombre de sous-périodes tᵢ égal au nombre des convertisseurs montés en série, dans lequel:
- dans chaque sous-période tᵢ:
- chaque entrée de commande est alimentée par un seul signal de commande et chaque signal de commande alimente une seule entrée de commande, et
- chaque signal de commande alimente un convertisseur qui est différent du convertisseur alimenté durant la sous-période précédente,
- dans chaque période Tₛ:
- chaque signal de commande alimente chaque convertisseur durant une seule des sous-périodes tᵢ.
